# EUROPEAN PATENT SPECIFICATION

(11) **EP 4 177 801 B1**
(45) Date of publication and mention of the grant of the patent: **01.01.2025**
(21) Application number: 21206410.9
(22) Date of filing: 04.11.2021
(51) Int. Cl.: G06Q 20/32, G06Q 20/38, G06N 20/00, G06Q 20/40

(54) **TECHNIQUES TO ASSESS A RISK OF ONLINE TRANSACTIONS**
VERFAHREN ZUR BEURTEILUNG EINES RISIKOS VON ONLINE-TRANSAKTIONEN
TECHNIQUES POUR ÉVALUER UN RISQUE DE TRANSACTIONS EN LIGNE

(43) Date of publication of application: 10.05.2023
(73) Proprietor: Deutsche Telekom AG, 53113 Bonn (DE)
(72) Inventor: Haberkorn, Günter, Birgland-Schwend (DE); Jepsen, Kathrin, Berlin (DE); König, Bianca, Berlin (DE); Vierroth, Volker, Berlin (DE); Fitis, Natalia, Bonn (DE); Kelling, Andreas, Berlin (DE); Matthes, Detlev, Berlin (DE); Pojda, Katrin, Bonn (DE)
(74) Representative: Braun-Dullaeus Pannen Emmerling Patent- & Rechtsanwaltspartnerschaft mbB

(56) References cited:
- EP-A1- 2 975 874
- US-A1- 2015 106 265
- US-A1- 2020 356 676
- US-A1- 2020 372 509
- US-A1- 2021 097 541
- US-A1- 2021 326 881

## Description

The invention relates to a method, a telecommunication system, a user device and a computer program product to assess a security risk of online based transactions.

In the last years many parts of the daily life of people got more and more digital. With this increase of digital transformation, trust and security related to digital means is getting more and more important because also scammers try to enter this digital world. Due to the higher network complexity, a growing number of systems are available via the Internet so that an associated higher number of attack vectors are possible. It is known that these attack vectors are increasingly exploited by criminal actors. To give just one example of how scammers might act: in the 'old' analog word, there was the 'classic' bank robbery, nowadays, 'digital bank robbery' is being performed in industrial scale: a perpetrator industry tries to take over digital identities from customers in a targeted manner and thus inflicts immense damage on risk owners and customers by issuing payment instructions.

Actually, such criminal transactions are processed via the infrastructure of the different telecommunication providers and their associated core networks. Of course, in principle it would be possible to introduce additional queries that could increase the security of customers. However, if additional queries would be introduced, that would conflict with user experience considerations. In principle, user experience considerations have the goal to make it as convenient as possible for the user to use online transactions means. In summary, the challenge for telecommunication providers, users and risk owners is to increase security of online transactions while at the same time providing a convenient use of these online transactions means.

Existing solutions that aim to enhance the security and at the same time providing a good user experience, try to perform security checks in the background, i.e. within the current system of the online transactions. Such approaches have already been launched by the "Mobile Connect" project - also within the context of standardization and operation actions with other telecommunication communication providers - to secure transactions. Those solutions are based on APIs that use individual attributes from telecommunication networks. Examples are that so-called KYC ("know your customer") approach, a date of the SIM card change approach or a validation of location information via a cell ID approach. However, these approaches still have some drawbacks, in particular they do not provide sufficient security for online transactions since criminal elements tend to use multiple attack vectors. This means that the so-called KYC might be efficient with respect to KYC-attacks but insufficient for non-KYC-attacks.

US 2021/326881 A1 shows Methods and systems for configuring a risk assessment engine to predict a risk of a user based on a topic classification across a set of unknown topics generated by a topic model. A risk determination system obtains a plurality of transactions previously conducted by a user. The risk determination system generates a risk document comprising a sequence of words that describe the plurality of transactions. A topic model is used to determine a topic classification for the user based on the sequence of words. The topic model comprises a natural language processor configured to classify the risk document to one or more topics based on the words within the risk document. The risk determination system configures the risk assessment engine to accept the topic classification as input value(s) for predicting a risk associated with the user.

US 2015/106265 A1 shows a system and methods for processing communication numbers or identifiers of various types to prevent fraud in transactions associated with the communication numbers are disclosed. The communication number processing system, in an example embodiment, verifies a communication number by retrieving characteristics data including network-derived characteristics data and/or other attributes relating to the communication number and processing the characteristics data and/or the attributes based on one or more rules. The communication number processing system further generates a fraud score for the communication number. A client system can then use the fraud score to assess a risk associated with engaging in a transaction with a user associated with the communication number.

US 2020/356676 A1 shows a system for managing cyber security risks includes a memory storing instructions and a processor that executes the instructions to perform operations. The operations include receiving raw entity data for one or more entities from a source system and converting the raw entity data to processed entity data having a format different from the first entity data. The operations include extracting attributes for the entities from the processed entity data and generating an initial risk score for a selected entity based on an entity initial attribute associated with that entity. The operations also include receiving a rule for determining a rule-based risk score and generating a rule-based risk score for the selected entity based on the entity attribute of the selected entity. Additionally, the operations include generating a risk score for the selected entity based on the initial and rule-based risk scores.

Therefore, it is the object the invention to provide improved security procedures regarding online transactions that can efficiently protect online transactions with respect to various online attack vectors.

This object is solved by the features of the independent claims.

The features of the various aspects of the invention described below or the various examples of implementation may be combined with each other, unless this is explicitly excluded or is technically impossible.

According to a first aspect of the invention, a method is provided to assess a security risk of online based transactions, wherein the method comprises the following steps, in particular the steps of the method are executed by a telecommunication system:
- Receiving an online transaction request by a user with means of a user device;
   ▪ the user in this context can be an actual person who performs an online transaction request; for example if he wants to sell business regarding his bank account or the user can be a company, for example a third party, who wants to assess a security risk of online based transactions for their customers. In particular the company can use the assessment of security risk to improve its online transaction security system that it offers to customers;
   ▪ the telecommunication system provides an interface, in particular by its IMS infrastructure, that is configured to receive the requests, wherein the user device comprises an interface that is configured to send the request to the telecommunication system; the user device can be a computer, a smartphone, a tablet and/or any device which can be used to communicate via the internet;
   ▪ a possible example of an online transaction is a purchase of the user via the internet;
- Retrieving by a telecommunication provider, at least one attribute, in particular attributes, associated to the transaction request;
   ▪ Using more than one attribute, i.e. retrieving multiple attributes facilitates in general to generate a more suited risk score; the risk score will be described in the following;
   ▪ attributes are different information elements that can describe for example technical and/or credential information about the user and/or the user device. For example: who did send the transaction request? Who is the receiver of the transaction request? What devices were used during the online transaction request, and/or many other possible attributes that shall be explained in the following; the attributes serve the purpose that it is possible to get valuable information about parties, in particular the user, involved in the online transaction. In that sense, they provide a basis for assessing a security risk. The more attributes are retrieved; the more attack vectors can be assessed regarding security issues.
- Handing over the at least one attribute, in particular the attributes, of the transaction request to a trained machine learning algorithm,
   ▪ the trained machine learning algorithm can also be described as an artificial intelligence (AI) model;
   ∘ wherein the machine learning algorithm was trained with multiple data sets of the at least one attribute, in particular attributes, and associated risks scores;
      ▪ in that sense, the training data is a 2-n tuple data set comprising (attributes, risks scores). In a preprocessing step, security experts can combine certain attributes, i.e. a set of different information about a certain online transaction, and assign a risk score to this distinct set of attributes. One possibility to determine this rescore is based on the expertise knowledge of the security experts. In the training process the machine learning algorithm that adjusts its neuronal network according to the data set (attributes, risks scores) and learns to assess risk scores based on attributes. The more data sets are used, the better the model gets adjusted to various combinations of attributes.
   ∘ wherein the trained machine learning algorithm is configured to calculate a risk score, in particular a network related forensic risk score "NRFRS", based on the provided attributes;
- Returning the calculated risk score, in particular returning the calculated risk score to the user and/or to a company that is associated with the online transaction request.

It is a core idea of the invention that the attributes are data that is associated to the telecommunication provider, in particular exclusively available to the telecommunication provider within its core network.

This provides the advantage that the telecommunication provider has access to those attributes, the access to retrieve the attributes cannot be prevented by the criminal elements.

A possible embodiment is that a company as a first user, in particular a bank, can assess the risk of an online transaction for their customers as second users. The second user sends his request of an online transaction with his user device to the first user. However, it is possible that this second user can be a criminal that tries to cheat the customer of the bank. The company then forwards the online transaction request to the telecommunication provider that can retrieve the attributes associated to the transaction request and return the calculated risk score based on the machine learning algorithm as described above. The returned calculated risk score enables the company to assess the probability if the user is a criminal element. The user can also be a customer whose user device has been hacked. Hence, if the word user will be used in the following, the user can be the company, like a bank, or an actual person.

This provides the advantage of being able to access security risks in a very flexible way with respect to various attack vectors. Basically, the flexibility is introduced by using the machine learning algorithm that is then also able to access a security risks for a certain combination of attributes that was not used by criminal analysts before. In addition, it is possible to assess the security risk in real time and/or to provide privacy because the only information element that is returned is the risk score that does not reveal relevant private information. The risk score can be made available internally but also to external customers, for example by dedicated API interfaces. It is possible to design the risk score on an absolute scale, for example from 1 to 10, wherein 1 indicates the lowest security risk and 10 indicates the highest security risk, but it is also possible to design the risk score as a probability value, wherein zero indicates the lowest security risk and one indicates the highest security risk.

The attributes can be weighted in a very flexible way by the security experts to meet certain security requirements or to be able to cope with new security attacks if criminal elements change their "tactics". It is even possible to weight the attributes differently regarding to different use cases, wherein for every case an individual trained machine learning model can be created. This provides the advantage of a very flexible security risks assessment that takes new attack vectors efficiently into account.

It is possible, that the user and/or the telecommunication provider implements different actions, based on the outcome of the risk score. For example, do not apply a 2^{nd} factor authentication method and allow the transaction based on a "good" risk score or stop a transaction or ask for 2^{nd} factor on case of a "bad" risk score. The risk owner may as well contact the customer and validate the transaction.

Use of the NRFRS scoring in online booking portals or customer portals of a telecommunications provider:
- grant an online business event
- reject an online business event
- pause and forward an online business event for manual processing
- refrain from or require 2FA in online registration processes.

In an embodiment, use-case-specific machine learning algorithms are implemented for different use cases for online transactions.

This provides the advantage that the use-case-specific machine learning algorithms can take specific requirements of the different use case into account. For example, a online banking transaction might have different attributes, attack vectors and might require a higher security than purchases of low-priced daily life things.

In an embodiment, the use-case-specific machine learning algorithms are trained with specific attributes and associated risks scores.

This provides the advantage that the different use-case-specific machine learning algorithms can yield individual risk scores. By using specific attributes, in particular those attributes that are really used in the context of the different use cases, it is possible to prevent "overfitting" problems of machine learning networks. Those "overfitting" problems can arise if more attributes are used to train the neuronal network than the actual number of attributes which are used by criminals in the distinct use case. Hence, the attributes used when training a specific use case can be a subset of all attributes that are in principle available.

In an embodiment, the telecommunication provider and/or the user and/or the company interrupt the online transaction if the risk score exceeds a predefined risk value. The interruption can be implemented within the system of the telecommunication provider and/or the company and/or the user device in an automated fashion if the risk value exceeds a predefined risk score.

This provides the advantage that risky online transactions can be stopped automatically to prevent damage for the customer. If the interruption is implemented in an automatic way, the online transaction can be stopped even without interaction of the customer which is especially beneficial for all the customers that are prone to new attack tactics.

Based on the risk score, in particular the company can:
- grant an online business event,
- reject an online business event,
- pause and forward an online business event for manual processing,
- refrain from or require 2FA in online registration processes.

In an embodiment, different use cases for online transactions have individual predefined risk values.

This provides the advantage that use cases can be treated differently regarding the industry segment. For example, a online banking transaction typically requires a higher security level than purchases of low priced daily life things.

In an embodiment, the user can adjust the predefined risk value on his user device or within his computing system.

In particular, this provides the advantage that the user can decide for himself at which risk score the online transaction will be interrupted by his user device or his system.

In an embodiment, the attributes are retrieved from databases of the telecommunication provider. In particular, the databases can be configured as a secure environment. In particular, it can be specified for each use case which attributes shall be retrieved. Furthermore, it can be specified that attributes being older than a predefined timestamp shall not be retrieved.

This provides the advantage of an efficient access to the relevant attributes, wherein the secure environment ensures that criminal elements cannot manipulate the attributes. The advantage of retrieving only attributes being younger than predefined timestamp helps to discard attributes that are out of date.

Possible attributes are SIM SWAPs, Fraud history, Type Allocation Code ("TAC"), eID, SIM Type, stolen credentials, contract data, operating system (OS), Coordinated Vulnerability Database ("CVD"), IMEI Blacklist (devices of perpetrators), Mobile Protect Pro, applications, location information, access information.

In an embodiment, the attributes are grouped into the following data classes of attributes:
- Device associated attributes,
   ∘ OS
   ∘ S/W version
   ∘ Maker
   ∘ Type (Mobile device/IOT device/M2M device/router)
   ∘ Device name
   ∘ Application
   ∘ Anti mal-ware products
- Interface associated attributes,
   ∘ IP address
   ∘ International Gateway
   ∘ National Gateway
   ∘ Home location
   ∘ Home WIFI
   ∘ Protocol
   ∘ Speed
- Credential associated attributes,
   ∘ User ID
   ∘ SIM change
- Traffic associated attributes,
   ∘ Traffic History
   ∘ Traffic pattern
   ∘ Known command & control server ("C2C") connections
   ∘ Traffic volume
   ∘ Traffic type
   ∘ Number of A-/B-parties (1 :n/n:1 pattern)
   ∘ Domestic/international traffic
   ∘ Charging volume
   ∘ Cell ID
   ∘ Global title
   ∘ Roaming
   ∘ Network generation/Service chain
- Process associated attributes, and/or
   ∘ Process weakness/vulnerability
   ∘ E2E process fraud abuse
   ∘ SIMSWAP time stamp
   ∘ SIM Type (eSIM/physical SIM)
   ∘ Contract details (Address, Contract age etc.)
   ∘ Services
   ∘ Contract type (business customer, private customer, M2M/IOT customer)
   ∘ Single SIM/MultiSIM;
- Fraud-History associated attributes.
   ∘ Known fraud pattern
   ∘ Known vulnerability database
   ∘ Device Fraud History by device
   ∘ Breached thresholds in Fraud Detection Systems
   ∘ Fraud indications based on fraudulent patterns
   ∘ Indication regarding malware infection and botnet communication
   ∘ Indication
   ∘ Stolen Credentials found
   ∘ Active anti-fraud blockings active;

Using attributes from different areas or dimensions result in a robust score that cannot be irritated by one attribute showing strange behavior.

In addition, the score may be applied for various business areas and fraud vectors without variations - even if those vectors were unknown at the time of score invention.

Through a holistic risk assessment of all data from the environment of the process, interface, network, credential, device and fraud, risks and the likelihood of abuse can be determined in near real-time and digital processes are available for intelligent risk management.

In an embodiment, training data of the machine learning algorithm comprises annotated and/or non-annotated historic fraud data.

Using historic fraud data provides the advantage according to an old well-known principle of physics "the experiment is the best teacher". In this context that means that historic fraud data is data that was actually used to commit online attacks so that this historic fraud data is the best starting point to train the machine learning algorithm because it covers real cases. By annotating this historic fraud data, security experts can update historic fraud data regarding recent approaches of criminal elements that did not happen in the original historic fraud data set.

In an embodiment, a feedback loop is used to update the machine learning algorithm.

This provides the advantage that the machine learning algorithm, in other words the AI model that calculates the risks scores, gets better over time and can take new developments of online attacks into account.

In an embodiment, the user and/or telecommunication provider triggers the feedback loop by editing the returned calculated risk score.

This provides an efficient way of triggering the feedback loop by providing new training data at the same time. The user and/or the communication provider will edit the returned calculated risk score if they think the return risk score was not accurate, for example because the returned risk score did not prevent a cyber-attack regarding the online transaction.

According to a second aspect of the invention, a data communication system, in particular a telecommunication system, is provided, wherein the telecommunication system is configured to execute the steps of the methods described above. The telecommunication system comprises servers that are configured to execute the steps of the method. In addition, the telecommunication system comprises appropriate interfaces to communicate over the Internet, in particular to receive the online transaction requests and return the calculated score results via REST API interfaces.

According to a third aspect of the invention, a user device is provided, wherein the user device is configured to perform a request and to receive and process the calculated risk score as described above.

According to a fourth aspect of the invention, a computer program product is provided, wherein the computer program product comprises instructions which, when the program is executed by a telecommunication system, cause the telecommunication system to carry out the steps of the method described above.

In the following, preferred implementation examples of the present invention are explained with reference to the accompanying figure:
- Fig. 1:: shows a schematic overview of the training process of a machine learning algorithm according to the inventive method.
- Fig. 2:: shows schematically a method of a request for an online transaction of a user and the returning of a calculated risk score of that very online transaction.
- Fig. 3:: shows schematically an implementation of a feedback loop in the telecommunication system to update the machine learning algorithm according to the inventive method.
- Fig. 4:: shows a further schematic overview of the inventive method.

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

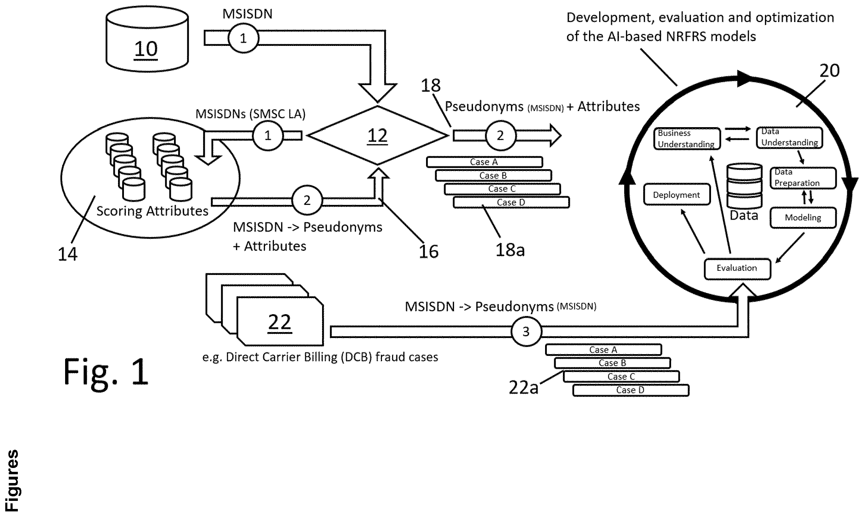

Fig. 1 shows a schematic overview of the training process of the machine learning algorithm of the inventive method.

A database 10, in particular a Short Message Service Center Large Account 10, comprises numbers "MSISDN" with passwords, in particular in the area of direct carrier billing. In a sense that database 10 comprises all possible events which means that every number of this database can trigger an online transaction.

Since a trained machine learning algorithm, in other words a trained AI-model, shall be able to identify in particular such online transactions that were affected, by criminals. It follows that not all numbers of the database 10 are needed to train the machine learning algorithm. Hence, all the numbers of the database 10 enter into the decision 12, wherein the decision 12 filters those numbers "MSISDN" that were actually affected by criminals.

In the next step 14, the attributes that can be used to calculate the risk score are retrieved from databases of the telecommunication provider. The attributes can comprise one and/or a combination of the following attributes: SIM SWAPs, Fraud History, TAC, eID, SIM Type, Stolen Credentials, Contract data, OS, CVD, IMEI BL, Mobile Protect Pro, type of connection, applications running an the user device, and/or Location verification.

In an optional step 16 the "MSISDN" and the associated attributes and the decision 12, wherein the decision 12 pseudonymises the "MSISDN" in order to maintain data privacy.

In step 18, the pseudonyms and the attributes served as the first input training data for the machine learning algorithm 20. The numeral reference 18a shows that it is possible to assign specific pseudonyms and the attributes for different use cases, in the example for cases A - D, as the first input training data. This would yield different trained machine learning models A - D, wherein each of the models is tailored to one of the use cases A - D. AI-models that are tailored in such a way provide general results which are more accurate.

The lower part of Fig. 1 shows the second part of the training data for the machine learning algorithm 20. In particular, in step 22 security experts evaluate a risk score of the corresponding events from which the attributes were retrieved in step 14. Based on their expertise, these security experts assign a risk score to each of the events in which criminals were involved. The numeral reference 22a shows that it is possible to assign specific risk scores for the different use cases, in the example for cases A - D, as the second input training data.

The machine learning algorithm 20 can be trained with the first and second input training data so that the trained machine learning algorithm 20 can return a risk score to determine the probability of criminal action if the associated attributes of the online transaction are given as input to the trained machine learning algorithm 20.

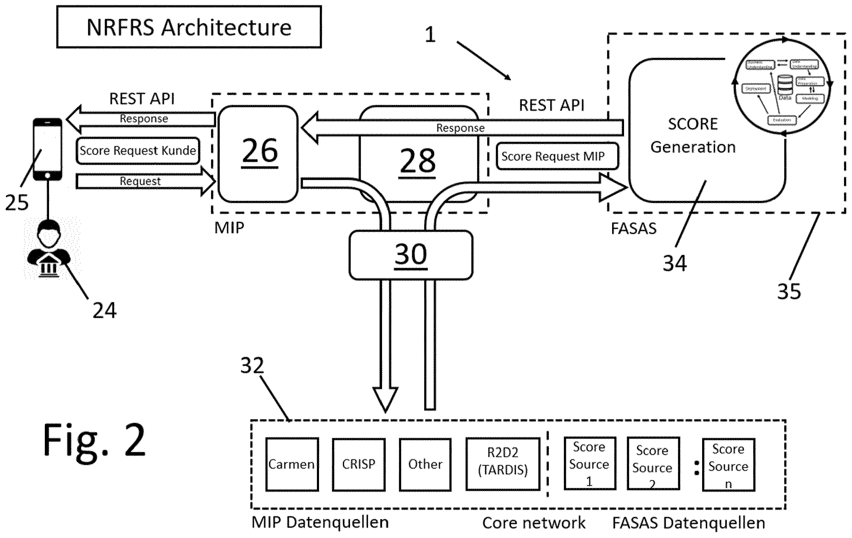

Fig. 2 shows schematically a request for an online transaction of a user and the returning of a calculated risk score of that very online transaction.

A user 24 requests a risk score by using his user device 25, for example a computer 25 and/or a smartphone 25, of a certain online transaction. The user 24 can use an API interface 26, in particular an API gateway 26, to send his request to a telecommunication system 1 of a telecommunication provider. The telecommunication system 1 comprises a network to transfer data and server entities to perform the tasks of a telecommunication system.

In step 28, the request is being enriched with the attributes that correspond to the request. To facilitate this enrichment 30, the attributes are retrieved from one or more databases 32 of the telecommunication provider. After the attributes have been added to the requests, the request serves as input for the trained machine learning algorithm 20. The trained machine learning algorithm 20 is implemented on a server 35 of the telecommunication provider and generates a calculated risk score 34 and returns the calculated risk score 34 to the user, in particular the calculated risk score 34 is returned as a response to the user via the API interface 26, in particular the API gateway 26.

Depending on the return value of the calculated risk score 34, the user can decide the probability of criminal action regarding his online transaction and can apply the appropriate measures. Possible measures are to continue with the online transaction, if the calculated risk 34 is below a predefined threshold or to stop the online transaction if the calculated risk are 34 is higher than the predefined threshold.

This shall be illustrated in the following by using examples:
In the following examples, a higher risk score indicates a less critical transaction regarding fraud - of course, this is merely a convention.

### Case 1 (critical)

Source: synthetic test data. According to the rules for the synthetic test data: local distance to home unusually large and a SIM swap/change occurred under 5 days result in a fraud case.
Example 1: ID (1): 170918; timestamp (1): 2021-06-14 11:59:10; Last MNP-Import (1): 2014-12-07 23:00:00; Activation Date (1): 2014-12-07 23:12:51; Last SIM-Change (1): 2021-06-14 11:16:41; local distance (1): 521 km;
   → risk score 34 (1): 0.0365;
Example 2: ID (2): 417025; timestamp (2): 2021-06-14 11:59:10; Last MNP-Import (2): 'empty'; Activation Date (2): 1998-11-03 10:06:14; Last SIM-Change (2): 2021-06-14 10:07:52; local distance (2): 529 km;
   → risk score 34 (2): 0.0237;

In example 2, even without a value of 'Last MNP-Import', it is possible to calculate the risk score.

### Case 2 (medium)

Example 3: ID (3): 50918; timestamp (3): 2021-06-14 11:59:10; Last MNP-Import (3): 2020-02-09 23:00:00; Activation Date (3): 2020-02-09 23:09:39; Last SIM-Change (3): 'empty'; local distance (3): 3 km;
→ risk score 34 (3): 0.567;

In example 2, Last SIM-Change (3): 'empty' means that according to the data available a SIM swap/change has never happened.

### Case 3 (not critical)

Example 4: ID (4): 23918; timestamp (4): 2021-06-14 11:59:10; Last MNP-Import (4): 'empty'; Activation Date (4): 2013-08-01 17:45:29; Last SIM-Change (4): 'empty'; local distance (4): 63 km;
   → risk score 34 (4): 0.981;
Example 5: ID (5): 3918; timestamp (5): 2021-06-14 11:59:10; Last MNP-Import (5): 'empty'; Activation Date (5): 2013-08-29 11:53:15; Last SIM-Change (5): 2016-12-14 13:22:16; local distance (5): 5 km;
   → risk score 34 (5): 0.980;

Another exemplary use case is described in the following:
In a first step: Transmission of a technical identifier by the user, i.e. RISK owner, to the telecommunication provider, in particular a NRFRS operator: e.g. MSISDN <491701234567>.
In a second step: the telecommunication provider determines further attributes from the operator network, in particular from the corresponding databases 32, on the basis of the identifier for the event, in particular the online transaction:
   Determination of the attributes: Enrichment of temporal information about the event: <2021-07-13T15:10:12.096Z>; Enrichment of IMSI: < 262010123456789>; Enrichment of IMEISV: < 3564840123456789>; Enrichment of current IP address: <18.71.1xy.xy>; Enrichment of the address data to the customer :<Muster-Str.;4;40123;City;Germany>--> Conversion to GEO coordinates <9.158610123456789;48.76880123456789>;
In a third step: Based on the transmitted raw data, additional attributes are determined that can be used for identification in misuse scenarios.
   E.g., enrichment of distance to residence: <512 km>; When was the last SIM Change:<2021-06-14 11:16:41>; When was the last SIM card change:<2014-12-07 23:00:00>;
   The attributes are fed to the trained machine learning algorithm 20 to determine the risk score 34 and a numerical value corresponding to the NRFRS score 34 is obtained.
In a fourth step: Return of the risk score 34:
   For example: <risk_score: 0.6617216828894676>

Now an additional individual interpretation can already be done here. For example: risk score 34 <= 0.1 --> traffic light RED; risk score 34 > 0.1 <= 0.4 -- > traffic light YELLOW; risk score 34 > 0.4 --> traffic light GREEN.

However, the interpretation can also be left to the user/risk owner. Depending on the value of the risk score 34, the telecommunication provider and/or the user can implement appropriate security means. For example, if the risk score is below 0.4, a 2-factor-autentification is started to secure the online transaction.

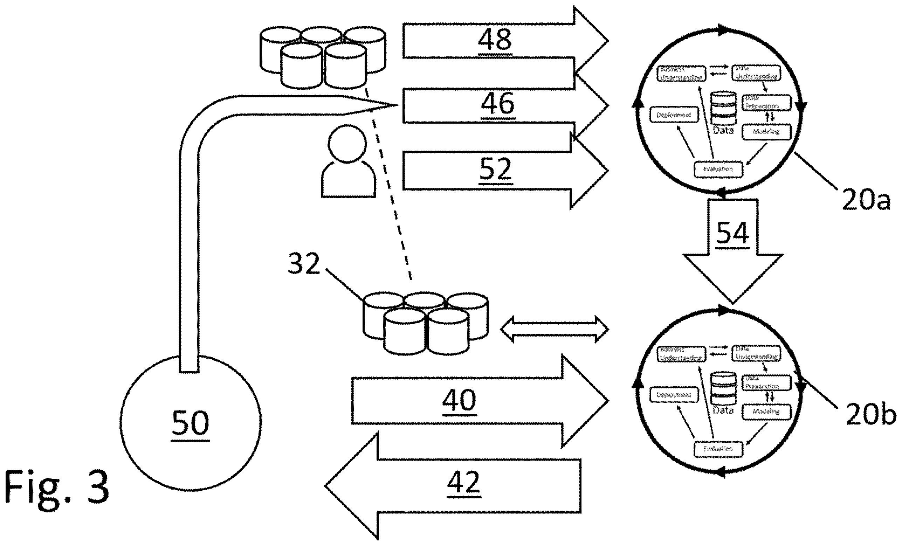

Fig. 3 shows schematically an implementation of a feedback loop in the telecommunication system to update the machine learning algorithm according to the inventive method.

To make Fig. 3 even clearer, the machine learning algorithm 20 has been divided into the to-be-trained machine learning algorithm 20a and into the trained machine learning algorithm 20b that can also be described as being the operational machine learning algorithm 20b.

In step 40, a user 50 makes a risk score request for an online transaction, wherein the request is almost performed in real time. This request can be submitted to the operational machine learning algorithm 20b as described in Fig. 2, wherein the attributes belonging to the request are retrieved from the database 32. The operational machine learning algorithm 20b then returns the calculated risk score 34 and returns the score resulted in step 42 to the user.

The user 50 can mark the returned risk score 34 as being true or false in step 44. In particular, he can mark the return risk score 34 as being false if it turned out that the transaction was actually affected by criminal action even if the returned risk score 34 indicated that the online transaction should be safe. This feedback of the user 50 can be transferred to a feedback loop 46, wherein this new information about the risk score can be used to train 48, in particular to retrain 48, the to-be-trained machine learning algorithm 20a. In addition to the feedback 46, fraud expertise 52 from security experts can be used to train the to-be-trained machine learning algorithm 20a. After the to-be-trained machine learning algorithm 20a was updated, it becomes the operational machine learning 20b in step 54.

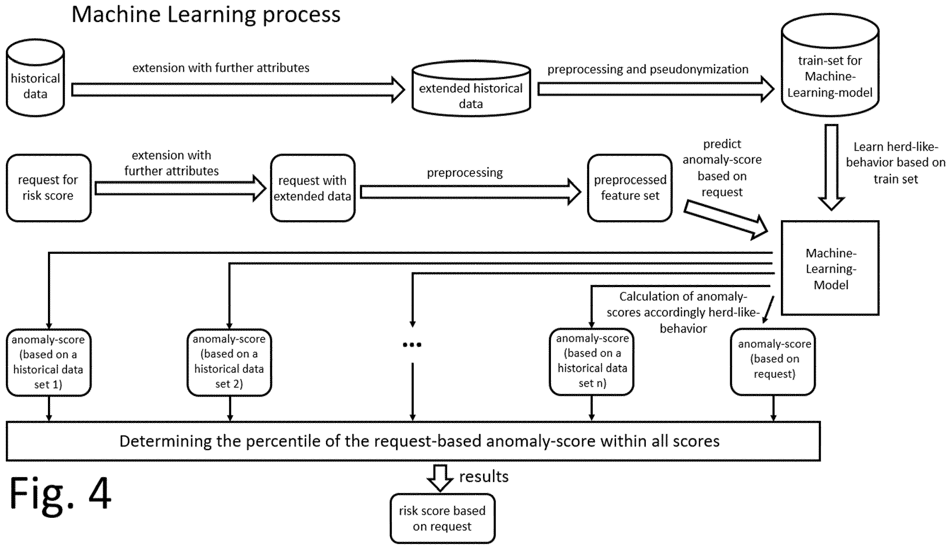

Fig. 4 shows a further schematic overview of the inventive method.

## Claims

1. A method to assess a security risk of online based transactions, wherein the method comprises the following steps executed by a telecommunication system:
• Receiving an online transaction request (24), in particular receiving an online transaction request (24) by a user with means of a user device (25);
• Retrieving (30) by a telecommunication provider at least one attribute associated to the transaction request;
• Handing over the at least one attributes of the transaction request to a trained machine learning algorithm (20),
o wherein the machine learning algorithm was trained with multiple data sets of at least one attribute and an associated risks score;
o wherein the trained machine learning algorithm is configured to calculate a risk score (34), in particular a network related forensic risk score "NRFRS", based on the provided attributes;
• Returning the calculated risk score, in particular returning the calculated risk score to the user and/or to a company that is associated with the online transaction request (24),
**characterized in that**
the attributes is data that is exclusively available to the telecommunication provider.

2. The method of claim 1, wherein use-case-specific machine learning algorithms are implemented for different use cases for online transactions.

3. The method of claim 2, wherein the use-case-specific machine learning algorithms are trained with specific attributes and associated risks scores.

4. The method of any of the claims, wherein the telecommunication provider and/or the user interrupt the online transaction if the risk score exceeds a predefined risk value.

5. The method of the claim 4, wherein different use cases for online transactions have individual predefined risk values.

6. The method of any of the claims 4 to 6, wherein the user can adjust the predefined risk value on his user device.

7. The method of any of the claims, wherein the attributes are retrieved from databases of the telecommunication provider.

8. The method of any of the claims, wherein the attributes are grouped in the following data classes of attributes:
• Device associated attributes,
• Interface associated attributes,
• Credential associated attributes,
• Traffic associated attributes,
• Process associated attributes, and/or
• Fraud-History associated attributes.

9. The method of any of the claims, wherein training data of the machine learning algorithm comprises annotated and/or non-annotated historic fraud data.

10. The method of any of the claims, wherein a feedback loop is used to update the machine learning algorithm.

11. The method of claim 10, wherein the user triggers the feedback loop by editing the returned calculated risk score.

12. A telecommunication system configured to execute the steps of the methods according to any of the claims 1-11.

13. A computer program product comprising instructions which, when the program is executed by a telecommunication system, cause the telecommunication system to carry out the steps of the method of claims 1 - 11.

## Patentansprüche

1. Verfahren zum Beurteilen eines Sicherheitsrisikos online-basierter Transaktionen, wobei das Verfahren die folgenden, von einem Telekommunikationssystem ausgeführten Schritte umfasst:
• Empfangen einer Online-Transaktionsanfrage (24), insbesondere Empfangen einer Online-Transaktionsanfrage (24) durch einen Benutzer mittels eines Benutzerendgeräts (25);
• Abfragen (30), durch einen Telekommunikationsanbieter, mindestens eines Attributs, das mit der Transaktionsanfrage verknüpft ist;
• Übergeben des mindestens einen Attributs der Transaktionsanfrage an einen trainierten maschinellen Lernalgorithmus (20),
∘ wobei der maschinelle Lernalgorithmus mit mehreren Datensätzen mit mindestens einem Attribut und einem zugeordneten Risikowert trainiert worden ist;
∘ wobei der trainierte maschinelle Lernalgorithmus dazu eingerichtet ist, basierend auf den bereitgestellten Attributen einen Risikowert (34), insbesondere eine netzwerkbezogene forensische Risikobewertung "NRFRS", zu berechnen;
• Zurückgeben des berechneten Risikowerts, insbesondere Zurückgeben des berechneten Risikowerts an den Benutzer und/oder an ein Unternehmen, das mit der Online-Transaktionsanfrage (24) verknüpft ist,
**dadurch gekennzeichnet, dass**
die Attribute Daten sind, die exklusiv dem Telekommunikationsanbieter zur Verfügung stehen.

2. Verfahren nach Anspruch 1, wobei anwendungsfallspezifische maschinelle Lernalgorithmen für verschiedene Anwendungsfälle für Online-Transaktionen implementiert werden.

3. Verfahren nach Anspruch 2, wobei die anwendungsfallspezifischen maschinellen Lernalgorithmen mit spezifischen Attributen und zugehörigen Risikowerten trainiert werden.

4. Verfahren nach einem der Ansprüche, wobei der Telekommunikationsanbieter und/oder der Benutzer die Online-Transaktion unterbrechen, falls der Risikowert einen vordefinierten Risikowert übersteigt.

5. Verfahren nach Anspruch 4, wobei verschiedene Anwendungsfälle für Online-Transaktionen individuelle vordefinierte Risikowerte aufweisen.

6. Verfahren nach einem der Ansprüche 4 bis 6, wobei der Benutzer den vordefinierten Risikowert auf seinem Benutzerendgerät anpassen kann.

7. Verfahren nach einem der Ansprüche, wobei die Attribute aus Datenbanken der Telekommunikationsanbieter abgefragt werden.

8. Verfahren nach einem der Ansprüche, wobei die Attribute in die folgenden Attribut-Datenklassen gruppiert sind:
• Geräte-bezogene Attribute,
• Schnittstellen-bezogene Attribute,
• Anmeldedaten-bezogene Attribute,
• Datenverkehrs-bezogene Attribute,
• Prozess-bezogene Attribute und/oder
• Betrugshistorien-bezogene Attribute.

9. Verfahren nach einem der Ansprüche, wobei Trainingsdaten des maschinellen Lernalgorithmus annotierte und/oder nicht annotierte historische Betrugsdaten umfassen.

10. Verfahren nach einem der Ansprüche, wobei eine Rückkopplungsschleife benutzt wird, um den maschinellen Lernalgorithmus zu aktualisieren.

11. Verfahren nach Anspruch 10, wobei der Benutzer die Rückkopplungsschleife durch Editieren des zurückgegebenen berechneten Risikowerts auslöst.

12. Telekommunikationssystem, das dazu eingerichtet ist, die Schritte der Verfahren nach einem der Ansprüche 1 bis 11 auszuführen.

13. Computerprogrammprodukt, umfassend Anweisungen, die, wenn das Programm von einem Telekommunikationssystem ausgeführt wird, das Telekommunikationssystem dazu veranlasst, die Schritte des Verfahrens nach Ansprüchen 1 bis 11 auszuführen.

## Revendications

1. Procédé d'évaluation d'un risque de sécurité de transactions en ligne, dans lequel le procédé comprend les étapes suivantes exécutées par un système de télécommunications :
• la réception d'une demande de transaction en ligne (24), en particulier la réception d'une demande de transaction en ligne (24) par un utilisateur au moyen d'un dispositif d'utilisateur (25) ;
• la récupération (30) par un fournisseur de télécommunication d'au moins un attribut associé à la demande de transaction ;
• la transmission du ou des attributs de la demande de transaction à un algorithme d'apprentissage automatique entraîné (20),
∘ dans lequel l'algorithme d'apprentissage automatique a été entraîné avec plusieurs ensembles de données d'au moins un attribut et un score de risque associé ;
∘ dans lequel l'algorithme d'apprentissage automatique entraîné est configuré pour calculer un score de risque (34), en particulier un score de risque médico-légal lié au réseau « NRFRS », sur la base des attributs fournis Renvoi du score de risque calculé, en particulier
• le renvoi du score de risque calculé à l'utilisateur et/ou à une entreprise qui est associée à la demande de transaction en ligne (24),
**caractérisé en ce que**
les attributs sont des données qui sont exclusivement disponibles pour le fournisseur de télécommunication.

2. Procédé selon la revendication 1, dans lequel des algorithmes d'apprentissage automatique spécifiques à un cas d'utilisation sont mis en oeuvre pour différents cas d'utilisation pour des transactions en ligne.

3. Procédé selon la revendication 2, dans lequel les algorithmes d'apprentissage automatique spécifiques à un cas d'utilisation sont entraînés avec des attributs spécifiques et des scores de risques associés.

4. Procédé selon une quelconque des revendications, dans lequel le fournisseur de télécommunications et/ou l'utilisateur interrompent la transaction en ligne si le score de risque dépasse une valeur de risque prédéfinie.

5. Procédé selon la revendication 4, dans lequel différents cas d'utilisation pour des transactions en ligne ont des valeurs de risque prédéfinies individuelles.

6. Procédé selon une quelconque des revendications 4 à 6, dans lequel l'utilisateur peut ajuster la valeur de risque prédéfinie sur son dispositif d'utilisateur.

7. Procédé selon une quelconque des revendications, dans lequel les attributs sont récupérés à partir de bases de données du fournisseur de télécommunications.

8. Procédé selon une quelconque des revendications, dans lequel les attributs sont regroupés dans les classes de données d'attributs suivantes :
• attributs associés au dispositif,
• attributs associés à l'interface,
• attributs associés aux informations d'identification,
• attributs associés au trafic,
• attributs associés au processus et/ou
• attributs associés à l'historique des fraudes.

9. Procédé selon une quelconque des revendications, dans lequel les données d'apprentissage de l'algorithme d'apprentissage automatique comprennent des données de fraude historiques annotées et/ou non annotées.

10. Procédé selon une quelconque des revendications, dans lequel une boucle de rétroaction est utilisée pour mettre à jour l'algorithme d'apprentissage automatique.

11. Procédé selon la revendication 10, dans lequel l'utilisateur déclenche la boucle de rétroaction en modifiant le score de risque calculé renvoyé.

12. Système de télécommunication configuré pour exécuter les étapes des procédés selon une quelconque des revendications 1-11.

13. Produit de programme informatique comprenant des instructions qui, lorsque le programme est exécuté par un système de télécommunication, amènent le système de télécommunication à exécuter les étapes du procédé selon les revendications 1-11.
